# EUROPÄISCHE PATENTSCHRIFT

(11) **EP 1 004 372 B1**
(45) Veröffentlichungstag und Bekanntmachung des Hinweises auf die Patenterteilung: **14.04.2004**
(21) Anmeldenummer: 99116917.8
(22) Anmeldetag: 27.08.1999
(51) Int. Cl.: B21D 41/04, B21K 21/14, F01N 7/18

(54) **Verfahren zur Herstellung von Rohrprofilelementen mit angestauchtem Kopfende und Schalldämpferaufhängung hergestellt nach diesem Verfahren**
Method of making hollow profile elements with swaged end and exhaust silencer suspension made by this method
Procédé de fabrication d'éléments profilés tubulaires comportant des extrémités refoulées et suspension de silencieux réalisée selon ce procédé

(30) Priorität: 25.11.1998 DE 19854284
(43) Veröffentlichungstag der Anmeldung: 31.05.2000
(73) Patentinhaber: Löttco GmbH & Co. KG, 58809 Neuenrade (DE)
(72) Erfinder: Wunderlich, Horst, 58809 Neuenrade (DE); Fingerhut, Frank, 59457 Werl (DE)
(74) Vertreter: Schröter & Haverkamp

(56) Entgegenhaltungen:
- DD-A- 203 248
- FR-A- 2 751 697
- US-A- 3 266 822
- US-A- 4 638 965

## Beschreibung

Die Erfindung betrifft ein Verfahren zum Herstellen von Rohrprofilelementen mit angestauchtem Kopfende, bei dem das anzustauchende Rohrende unterhalb der Stauchlänge in einem Haltewerkzeug aufgenommen ist und bei dem das Anstauchen des durchmessergrößeren Kopfendes über ein in achsialer Richtung verfahrbares Stauchwerkzeug mit einer Negativform für das anzustauchende Kopfende erfolgt, sowie eine entsprechende nach diesem Verfahren hergestellte Schalldämpferaufhängung.

Zur Abhängung von Schalldämpferanlagen an Kraftfahrzeugen sind aus Metallrohrprofilen gefertigte Aufhängungen bekannt, die fahrzeugseitig und anlagenseitig befestigt werden und elastische Schwingungsdämpfungselemente zur Verbindung der Anlage mit dem Kraftfahrzeug aufnehmen. Aus Gewichtsgründen werden Rohrprofilelemente verwendet, die mehrfach verkröpft bzw. abgebogen sind und an ihrem freien Ende eine kopfartige Anstauchung aufweisen, die zur Halterung eines aufgesprengten Schwingungsdämpfungselementes dienen. Schalldämpferaufhängungen dieser Art bestehen entweder aus korrosionsfreiem Material, oder sie sind mit korrosionsfesten Beschichtungen versehen. Während korrosionsfeste Werkstoffe die Materialkosten solcher Aufhängungen verteuern, haben Beschichtungen den Nachteil, daß das Beschichtungsmaterial in starkem Maße in die Rohrprofilelemente hineinfließt, welches einen hohen Beschichtungsmaterialaufwand erfordert und lange Aushärtungszeiten zur Folge hat, die im Fertigungsablauf störend ist. Die offenen Enden solcher Schalldämpferaufhängungen als Rohrprofilelemente haben bei Kraftfahrzeugen außerdem den Nachteil, daß bei hohen Fahrgeschwindigkeiten an den offenen Seiten Geräusche entstehen.

Die Aufgabe der Erfindung besteht darin, ein Verfahren vorzuschlagen, mit dem Rohrprofilelemente mit angestauchtem Kopfende in fertigungstechnisch einfacher Weise verschlossen werden können und mit dem insbesondere in kostengünstiger Weise Schalldämpferaufhängungen aus Rohrprofilelementen hergestellt werden können.

Gelöst wird die Aufgabe der Erfindung mit einem Verfahren nach Anspruch 1. Mit einem solchen Verfahren wird das an sich bekannte anzustauchende, jedoch stimseitig offene Kopfende ohne zusätzliche andersartige Bearbeitungsvorgänge verschlossen. Zusätzlich besteht die Möglichkeit, auch das andere Ende des Rohrprofilelementes in einfacher Weise während des bekannten Fertigungsverfahrens zu verschließen, beispielsweise durch flache Verpressung.

Für die Durchführung des erfindungsgemäßen Verfahrens ist es von besonderer Bedeutung, das zu stauchende Rohrende in der vorgeschlagenen Weise anzufasen. Durch entsprechende Ausbildung der Negativform im Stauchwerkzeug erfolgt dann während des Anstauchvorganges das Einbiegen der inneren Ränder der Bohrung des Rohrprofilelementes bis zur endgültigen Schließung und einem anschließenden Kaltverpressen in dem zu verschließenden Bereich bis zur Ausbildung der gewünschten und durch die Negativform vorgegebenen durchmessergrößeren Form des Kopfendes. Dabei kann mit herkömmlichen Stauchwerkzeugen und üblichen Preßdrücken eine Verformung in diesem Bereich erreicht werden, die zu ausreichend mechanisch festen und flüssigkeitsdichten Wandstärken führt. Bevorzugt soll dabei eine Wandstärke im Bereich des Bohrungsverschlusses erzielt werden, die etwa der Wandstärke des Rohrprofilelementes entspricht.

Zur Erfindung gehört auch eine nach dem geschilderten Verfahren hergestellte Schalldämpferaufhängung als Rohrprofilelement. Eine Schalldämpferaufhängung gemäß dem Oberbegriff des Anspruchs 3 ist beispeilsweise aus der FR-A-2 751 697 bekannt. Eine solche Schalldämpferaufhängung gemäß Anspruch 3 ist ein verschiedenartig mehrfach abgewinkeltes bzw. verkröpftes Rohrprofilelement, welches an einem Ende den durchmessergrößeren, pilzartigen, geschlossenen Kopf aufweist und am anderen Ende abgeflacht und flüssigkeitsdicht zusammengepreßt ist. Eine solche Schalldämpferaufhängung aus einem gewöhnlichen Stahl (ST 37) ist in der Regel zur Korrosionsfestigkeit außen beschichtet. Beschichtungsmaterial vermag bei einer solchen Vorrichtung nicht in das Innere einzudringen, da das Rohrprofilelement an beiden Seiten dicht verschlossen ist.

Anhand eines abgebildeten Ausführungsbeispieles wird die Erfindung im folgenden näher erläutert. Es zeigen:
- **Fig. 1**: In einer schematischen Schnittdarstellung das anzustauchende Ende eines Rohrprofilelementes mit den Stauchwerkzeugen,
- **Fig. 2**: die entsprechende Darstellung nach Beendigung des Stauchvorganges und
- **Fig. 3-5**: Ansichten des als Schalldämperaufhängung ausgebildeten Rohrprofilelementes.

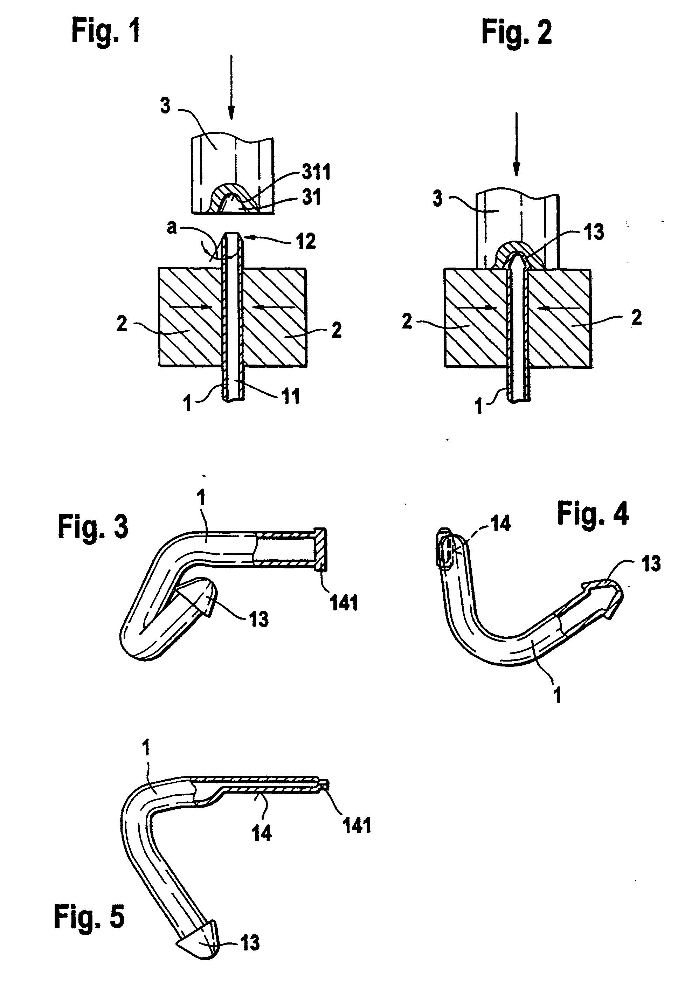

Zunächst wird auf Figur 1 Bezug genommen. Das zunächst als Rohling in dem Haltewerkzeug 2 unterhalb seiner Anstauchlänge eingespannte Rohrprofilelement 1 ist im Bereich seines Endes 12 angefast unter einem Winkel a kleiner als 45° gegenüber der Rohrachse. Der Grad dieser Anfasung und die Anstauchlänge sind abhängig vom Innendurchmesser des Rohrprofilelementes, seiner Wandstärke und seines Materials. Das zur Anstauchung notwendige Stauchwerkzeug 3 besitzt eine der endgültigen Form des Kopfendes entsprechende Negativform 31 mit der gewünschten und die Verformung begünstigenden abgerundeten bzw. balligen Kontur 311. Zur Anstauchung wird dieses Werkzeug 3 in Pfeilrichtung verfahren.

Bei der Verfahrung des Werkzeuges 3 werden zunächst die angefasten Bereiche des Rohrendes 12 nach innen gebogen, das Material wird nach innen gepreßt durch die Anstauchung, solange, bis sich die nach innen gebogenen Randbereiche berühren. Danach erfolgt eine Art Kaltpreßverschweißung. Am Ende weist das Rohrprofilelement 1 eine aus Figur 2 ersichtliche Form des Kopfendes 13 auf. Im Bereich des Innendurchmessers ist dieser Kopf flüssigkeitsdicht verschlossen, vorzugsweise mit einer Wandstärke, die etwa der Wandstärke des Rohrprofilelementes 1 entspricht.

Das mit den Figuren 3 - 5 dargestellte Rohrprofilelement 1 ist eine spezielle Schalldämpferaufhängung für Kraftfahrzeuge. Nach dem vorher geschilderten Verfahren ist an dem entsprechend angefasten Rohling eines Rohrprofiles der geschlossene pilzförmige, durchmessergrößere Kopf 13 angeformt. Das Element ist mehrfach abgebogen bzw. verkröpft. An seinem anderen Ende ist zur Schließung des Rohrprofiles eine Abflachung 14 vorgesehen, die an ihrem äußeren Ende 141 dicht zusammengepreßt ist. Dadurch ist diese Schalldämpferaufhängung an beiden Seiten dicht verschlossen. Die notwendigen Verformungs- und Abbiegungsvorgänge können in einfacher Weise auf üblichen maschinellen Einrichtungen gleichzeitig ohne Umsetzen der Werkstücke vorgenommen werden. Aus diesem Grunde sind derartige Elemente fertigungstechnisch einfach, d.h. mit reduzierten Kosten herstellbar.

### Zusammenstellung der Bezugszeichen

- 1: Rohrprofilelement, Schalldämpferaufhängung
- 11: Innendurchmesser
- 12: Anfasung
- 13: Kopfende
- 14: abgeflachtes Rohrprofilende
- 141: Zusammenpressung

- 2: Haltewerkzeug

- 3: Stauchwerkzeug
- 31: Negativform
- 311: Kontur

- a: Anfasungswinkel

## Patentansprüche

1. Verfahren zum Herstellen von Rohrprofilelementen (1) mit angestauchtem Kopfende (13), bei dem das anzustauchende Rohrende (12) unterhalb der Stauchlänge in einem Haltewerkzeug (2) aufgenommen ist und bei dem das Anstauchen des durchmessergrößeren Kopfendes (13) über ein in achsialer Richtung verfahrbares Stauchwerkzeug (3) mit einer Negativform (31) für das anzustauchende Kopfende (13) erfolgt, **gekennzeichnet durch** folgende Verfahrensschritte:
a) Anfasen des zu stauchenden Rohrendes (12) mit einem Anfasungswinkel (a) kleiner 45° gegenüber der Rohrachse,
b) Stauchen des angefasten Rohrprofilendes (12) bis zur Schließung des Innendurchmessers (11) des Rohrprofilendes **durch** Kaltverpressung,
c) Verformung des geschlossenen Rohrprofilendes bis zur Erreichung der endgültigen Außenform des Kopfendes (13) mit einer die Innendurchmesseröffnung ausreichend mechanisch fest und flüssigkeitsdicht verschließenden Wandstärke.

2. Verfahren nach Anspruch 1, **dadurch gekennzeichnet, daß** die Anstauchung des Kopfendes (13) in der endgültigen Form im Bereich des verschlossenen Innendurchmessers (11) eine Wandstärke in achsialer Richtung aufweist, die etwa der Wandstärke des Rohrprofilelementes (1) entspricht.

3. Schalldämpferaufhängung aus einem mehrfach abgewinkelten bzw. verkröpften Rohrprofilelement (1), welches an einem Ende ein durchmessergrößeres, pilzartiges Kopfende (13) aufweist, **dadurch gekennzeichnet, daß** das Kopfende (13) geschlossen und nach dem Verfahren gemäß Anspruch 1 hergestellt ist, und daß das Rohrprofilelement (1) am anderen Ende (14) abgeflacht und flüssigkeitsdicht zusammengepreßt ist.

4. Schalldämpferaufhängung nach Anspruch 3, **dadurch gekennzeichnet, daß** das abgeflachte Rohrprofilende (14) an seinem äußeren Ende (141) bereichsweise zusammengepreßt ist.

## Claims

1. Method for producing pipe profile elements (1) having a closed swaged head end (13), in which method the pipe end (12) to be swaged is received in a retaining tool (2) over less than the swaging length, and in which the swaging of the head end (13) which is larger in diameter is carried out by a swage tool (3) which is displaceable in an axial direction and has a negative die (31) for the head end (13) to be swaged, **characterised by** the following method steps:
a) chamfering the pipe end (12) to be swaged, with a chamfer angle (a) of less than 45° relative to the pipe axis,
b) swaging the chamfered pipe profile end (12) until the inside diameter (11) of the pipe profile end is closed by cold pressing,
c) deforming the closed pipe profile end until the final external shape of the head end (13) is reached with a wall thickness which closes the inside diameter opening in a sufficiently mechanically strong and fluid-tight manner.

2. Method according to claim 1, **characterised in that** the swaging of the head end (13) in the final form has, in the region of the closed inside diameter (11), a wall thickness in an axial direction which corresponds approximately to the wall thickness of the pipe profile element (1).

3. Suspension for an exhaust silencer, said suspension comprising a pipe profile element (1) which has a plurality of bends or right angles and which has at one end a mushroom-like head end (13) which is larger in diameter, **characterised in that** the head end (13) is closed and produced according to the method as per claim 1, and **in that** the pipe profile element (1) is flattened and pressed together in a fluid-tight manner at the other end (14).

4. Exhaust silencer suspension according to claim 3, **characterised in that** the flattened pipe profile end (14) is pressed together in regions at its outer end (141).

## Revendications

1. Procédé de fabrication d'éléments profilés tubulaires (1) comportant une extrémité refoulée (13), consistant à maintenir sous la longueur de refoulement l'extrémité (12) du tube à refouler par un outil de maintien (2) et consistant à refouler la tête d'extrémité (13) d'un diamètre plus grand sur un outil de refoulement (3) pouvant se déplacer axialement, à l'aide d'une forme négative (31) pour la tête d'extrémité (13) à refouler, **caractérisé par** les étapes de procédé suivants :
a) Biseautage de l'extrémité (12) du tube à refouler selon un angle de biseautage (a) inférieur à 45° par rapport à l'axe du tube,
b) Refoulement de l'extrémité (12) profilée tubulaire biseautée jusqu'à fermeture du diamètre intérieur (11) de l'extrémité profilée tubulaire par pressage à froid,
c) Déformation de l'extrémité profilée tubulaire fermée jusqu'à obtenir la forme extérieure définitive d'une tête d'extrémité (13) comportant une épaisseur de paroi qui ferme, avec suffisamment de résistance mécanique et de manière à la rendre étanche par rapport aux liquides, l'ouverture du diamètre intérieur.

2. Procédé selon la revendication 1 **caractérisé en ce que** la refoulement de la tête d'extrémité (13) présente dans sa forme définitive, au niveau du diamètre intérieur (11) refermé, une épaisseur de paroi qui correspond axialement plus ou moins à l'épaisseur de paroi de l'élément profilé tubulaire (1).

3. Suspension de silencieux constituée d'un élément profilé tubulaire (1) plusieurs fois coudé ou plié, qui présente à une extrémité une tête d'extrémité (13) au diamètre plus grand, à la manière d'un champignon, **caractérisée en ce que** la tête d'extrémité (13) est fermée et fabriquée selon le procédé de la revendication 1 et que l'élément profilé tubulaire (1) est aplati à l'autre extrémité (14) et resserré par pression de manière à être étanche par rapport aux liquides.

4. Suspension de silencieux selon la revendication 3, **caractérisée en ce que** l'extrémité profilée tubulaire (14) aplatie est, selon les zones, resserrée par pression à son extrémité extérieure (14).
